# EUROPEAN PATENT APPLICATION

(11) **EP 3 609 166 A1**
(43) Date of publication of application: **12.02.2020**
(21) Application number: 18187842.2
(22) Date of filing: 07.08.2018
(51) Int. Cl.: H04M 1/02, B29C 45/14

(54) **PORTABLE ELECTRONIC DEVICE WITH COMPOSITE BACK AND METHOD OF MANUFACTURE**

(71) Applicant: SABIC Global Technologies B.V., 4612 PX Bergen op Zoom (NL)
(72) Inventor: KULKARNI, Sandeep Chandrakant, 6160 AH Geleen (NL); HOCKER, Thomas, Houston, TX 77042 (US); KASHIF, Syed Muhammad, 6160 AH Geleen (NL); MCCANN, John Gillespie, Houston, TX 77042 (US); ZUBER, Peter James, Houston, TX 77042 (US); DAVIS, Scott Michael, Houston, TX 77042 (US); KLINEDINST, Keith, Houston, TX 77042 (US)
(74) Representative: Balder IP Law, S.L.

(57) **Abstract**

A portable electronic device is disclosed. The device includes an injection-molded housing back of a thermoplastic composition including fiber and resin. A housing side wall is attached to the injection-molded housing back. The housing side wall includes an outer side wall member that includes a surface to which the thermoplastic composition is molded. A cover is engaged with the housing side wall, defining an enclosed internal space surrounded by the housing back, the housing side wall, and the cover. An electronic component is enclosed in the internal space.

## Description

### BACKGROUND

Portable electronic devices such as mobile phones, tablets, watches, headphones, speakers, and numerous other devices have been adopted for widespread use around the world. Mobile phones as well as other electronic communication devices typically are encased in housings. There are specifications for portable electronic device housings, including specifications such as weight, rigidity or stiffness, strength, impact resistance, or compatibility with electronic, operator interface, or other functional requirements of the portable electronic device. Current technologies do not always adequately meet all desired specifications, and there continues to be a desire for new approaches.

### BRIEF DESCRIPTION

A portable electronic device is disclosed herein. The device includes a laminate composite housing back comprising fiber and resin. A housing side wall is attached to the laminate composite housing back. The housing side wall includes an outer side wall member. An injection molded connector member is molded to a first surface on the outer side wall member and to a second surface on the housing back. A cover is engaged with the housing side wall, defining an enclosed internal space surrounded by the housing back, the housing side wall, and the cover. An electronic component is enclosed in the internal space.

Also disclosed is a method of making a portable electronic device. According to the method, a laminate composite housing back and a side wall member is placed in a mold, and a fluid thermoplastic polymer composition is injected into the mold to form a connector member molded to the housing back and the side wall member. The housing back, side wall member, and connector member together form an open housing. An electronic component is disposed in the open housing, and a cover is engaged with the side wall to enclose the electronic component in the housing.

Also disclosed is a method of making a housing including a back and a side wall. According to the method, a laminate composite housing back is placed in a mold. A fluid thermoplastic polymer composition is injected into the mold. The injection of the fluid thermoplastic composition under pressure deforms a peripheral portion of the housing back under pressure to form an outer side wall member, and to mold the fluid thermoplastic polymer composition to the outer side wall member and to the housing back.

The above described and other features are exemplified by the following figures and detailed description.

### BRIEF DESCRIPTION OF THE DRAWINGS

The following figures are exemplary embodiments wherein the like elements are numbered alike.
FIG. 1 is an exploded isometric view of a schematically-represented portable electronic component and the assembly thereof.
FIG. 2 schematically shows an isometric view of an outer side wall member disposed in a mold.
FIG. 3 schematically shows injection of a fluid thermoplastic composition into a mold.
FIG. 4 schematically shows a cross-sectional view of outer side-wall member and housing back inserts in a mold.
FIG. 5 schematically shows a cross-sectional view of the filled mold at the cross-section of FIG. 4.
FIG. 6 schematically shows a housing back, outer side wall member, and connector member at the cross-section of FIG. 4.
FIG. 7 schematically shows an isometric view of a housing back and a unitary outer side wall member such as a metal outer side wall member on a five-sided housing.
FIG. 8 schematically shows an isometric view of a housing back and outer side wall end members such as metal outer side wall end members and outer side wall side members such as polymeric outer side wall members on a five-sided housing.
FIG. 9 schematically shows a cross-sectional view of fabrication of a housing side wall in which a laminate composite housing back forms an outer side wall member.
FIG. 10 schematically shows a cross-sectional view of fabrication of a housing side wall in which a laminate composite housing back forms an outer side wall member.

### DETAILED DESCRIPTION

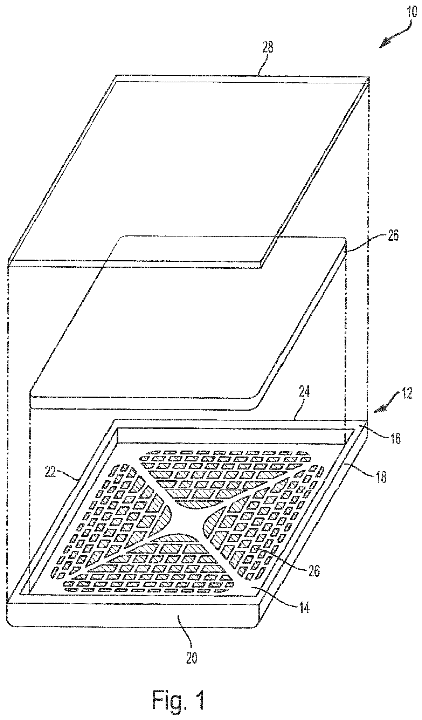

With reference to the Figures, FIG. 1 is an exploded isometric view of a schematically-represented portable electronic device 10 and the assembly thereof. As shown in FIG. 1, a housing 12 includes a housing back 14 and an attached side wall 16. The housing 12 shown in FIG. 1 can be characterized as an open five-sided housing with the housing back 14 as one side and four side wall sections 18, 20, 22, and 24 as the other four sides. In some embodiments, the housing back 14 can include various channels, cut-outs, or vias to accommodate electronic or other components (e.g., antennas, speakers, microphones, electrical connectors) of the portable electronic device 10. As further shown in the exploded view of FIG. 1, the portable electronic device can be assembled by disposing an electronic component 26 in the open housing 12, and engaging a cover 28 with the side wall 16 to enclose the electronic component 26.

The electronic component 26 can be any type of electronic component for a portable electronic device. Examples of electronic components include, but are not limited to a main logic board, processors (e.g., one or more CPUs, microcontrollers, field effect gate arrays, or other types of processors), system memory, data storage devices (e.g., solid state or hard drive), speakers, wireless modems, antennas, batteries, etc. A single electronic component or multiple electronic components integrated into a single module can be disposed in the open housing 12 as shown schematically in FIG. 1, or multiple electronic components can be separately disposed in the open housing 12 and assembled in place. The electronic component 26 can be attached or secured in place in the housing to an optional support structure (not shown) with fasteners such as screws, clips, or rivets, or with an adhesive such as a curable polymer adhesive. The cover 28 can be formed from any material such as plastic, metal, or glass, and in some embodiments cover 28 can be a clear glass or plastic cover through which an electronic display (as an electronic component 26) can be viewed. The cover 28 can be engaged or attached to the housing 12 with fasteners such as screws, clips, or rivets, or with an adhesive such as a curable polymer adhesive.

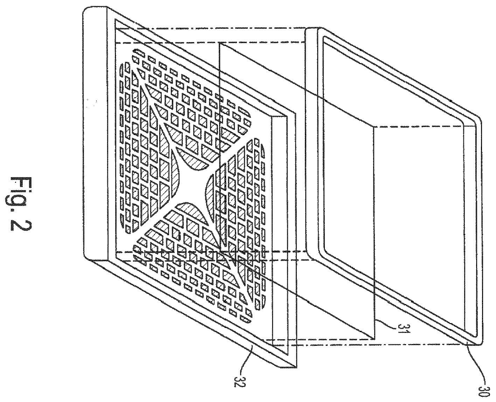

The fabrication and configuration of the housing 12 is described in further detail below. As mentioned above, the housing 12 includes a laminate composite back and an outer side wall member. FIG. 2 schematically shows a part of the fabrication process in an exploded view. As shown in FIG. 2, an outer side wall member 30 and a laminate composite housing back 31 is disposed in a mold 32. In some embodiments, the thickness of the laminate composite housing back 31 can be in a range with a lower end of 0.65 mm, 0.8 mm, or 1.0 mm, and an upper end of 1.5 mm, 2.0 mm, or 2.5 mm. These range endpoints can be independently combined to form a number of different ranges, and all ranges represented by each possible combination are hereby expressly disclosed (i.e., 0.65-1.5 mm, 0.65-2.0 mm, 0.65-2.5 mm, 0.8-1.5 mm, 0.8-2.0 mm, 0.8-2.5 mm, 1.0-1.5 mm, 1.0-2.0 mm, and 1.0-2.5 mm). Each possible range for the above-disclosed endpoints is recited above by way of example; however, the skilled person can envisage each such range for other similarly disclosed ranges herein without the need for explicit recitation of each such range. In some embodiments, the thickness of the side wall member 30 can be in a range with a lower end of 0.65 mm, 0.8 mm, or 1.2 mm, and an upper end of 1.8 mm, 2.2 mm, or 3.7 mm. These range endpoints can be independently combined to form a number of different ranges, and all ranges represented by each possible combination are hereby expressly disclosed (e.g., 0.65-3.7 mm, 1.2-2.2 mm, 0.8-1.8 mm, etc.)

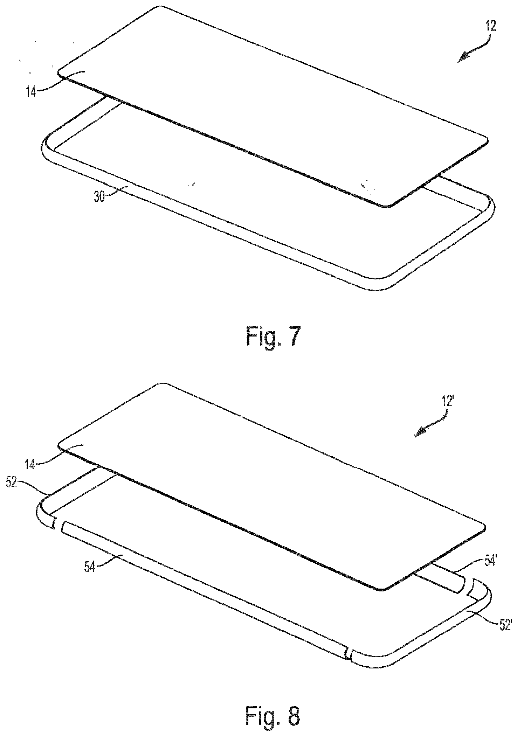

The outer side wall member 30 can be made from various materials. It should be noted here that although FIG. 2 shows a unitary contiguous outer side wall member 30, other example embodiments such as the embodiment of FIG. 7 described in detail below include multiple outer side wall members. It should be understood that unless explicitly stated otherwise, any reference herein to an outer sidewall member can include an outer side wall member that extends along less than the entirety of the electronic device periphery.

In some embodiments, the outer side wall member can include a structure formed of a material to promote structural integrity of the housing 12, referred to herein as a "structural material". In some embodiments, the structural material can include a metal. Examples of metals include but are not limited to aluminum, titanium, or stainless steel. In some embodiments, the structural material can include a composite material comprising resin and fiber. In some embodiments, the fiber can be aligned, or can be continuous, or can be both aligned and continuous. For example, in some embodiments, the outer side wall member can include a composite structure comprising resin and continuous fiber, also known as a continuous fiber composite. In some embodiments, continuous fiber reinforcement can provide a fiber content of at least 50% by volume based on the total volume of the composite material. In some embodiments, the fibers are aligned or continuous along the entirety of the length of the outer side wall member. In some embodiments, the fibers are continuous along the length of a side of a five-sided open housing such as the housing 12. In some embodiments, the fibers can be aligned in a single direction such as along the length of the outer side wall member. In some embodiments, the continuous fibers can be oriented in multiple directions such as a bidirectional weave (e.g., a 0-90 degree fabric), a tri-directional weave, a non-woven mesh, or in a wound configuration.

In some embodiments, alignment of non-continuous short fibers (e.g., fiber lengths in the part of 0.2 mm to 1 mm), or in some embodiments long fibers (e.g., fiber length of 0.5 mm to 2.5 mm), can be achieved by injection molding with techniques including optimized mold design and molding processing parameters. In some embodiments, longer fiber length in the part or fiber alignment in the injection molded side wall members can be promoted by injection molding the parts larger than the shape of the final side wall member, and then removing excess material to achieve the final shape, as disclosed in U.S. patent application Serial No. 62/655,780, entitled "Method of Making Portable Electronic Device with Shaped Side Wall", filed on April 10, 2018, the disclosure of which is incorporated herein by reference in its entirety. Other types of materials can be used for the outer side wall members, including but not limited to injected molded thermoplastic compositions with or without reinforcing fibers such as chopped fibers.

Various materials can be used for fibers in a structural material for an outer side wall member such as outer side wall member 30. In some embodiments, a structural material is reinforced with carbon fibers or aramid fibers. Other materials for fibers used for the composite outer side wall members can include any of the materials for fibers described below for the injection molded thermoplastic composition. Although conductive fibers can be used, in some embodiments, the fibers are non-conductive and transparent to electromagnetic radiation in at least a portion of the outer side wall member, such as a portion of the housing covering a wireless charging port or an antenna. Polymers for composite outer side wall members can include any of the polymers described below for the laminate composite housing back. In some embodiments, the outer side wall member can exhibit targeted properties such as enhanced flexural strength and impact resistance. In some embodiments, a surface of the outer sidewall member to which the thermoplastic composition is molded can include a surface treatment to enhance contact and adhesion of the thermoplastic composition to the outer side wall member. Examples of surface treatments include surface etching with mechanical or chemical etching agents, application of polymer adhesives that are compatible with thermoplastic polymer resin, plasma treatment, or laser engraving.

The laminate composite housing back can be made by laminating a plurality of fiber sheets and resin. The resin used can be any of the thermoplastic polymer resins described below for the injection molded connector member, as well as thermoset polymers such as epoxy resins or thermoset polyurethanes. The resin can be pre-impregnated into the fiber sheets (i.e., prepreg sheets) or can be infused into the sheets, depending on the fabrication technique that is used. Fiber sheets can be woven or non-woven, continuous or discontinuous, with fibers that are aligned or not aligned. In some embodiments, the fibers can be aligned, or can be continuous, or can be both aligned and continuous. The amount of fiber can vary depending on the target properties of the housing. In some embodiments, the fiber is present in laminate composite housing back in an amount in a range with a low end of 10%, 20%, or 35%, and an upper end of 40%, 50%, or 65%, with the percentages expressed as volume percentage based on the total volume of the thermoplastic composition. These range endpoints can be independently combined to form a number of different ranges, and all ranges represented by each possible combination are hereby expressly disclosed. Although conductive fibers can be used, in some embodiments, the fibers are non-conductive and transparent to electromagnetic radiation in at least a portion of the housing, such as a portion of the housing covering a wireless charging port or an antenna. The fibers can include fibrous non-conductive fillers used in polymeric resins to impart improved properties to polymeric composites and having an aspect ratio greater than 1. Such fillers may exist in the form of whiskers, needles, rods, tubes, strands, elongated platelets, lamellar platelets, ellipsoids, micro fibers, nanofibers and nanotubes, elongated fullerenes, and the like. Where such fillers exist in aggregate form, an aggregate having an aspect ratio greater than 1 will also suffice for the purpose of this invention. Examples of such fillers well known in the art include those described in "Plastic Additives Handbook, 5th Edition" Hans Zweifel, Ed, Carl Hanser Verlag Publishers, Munich, 2001. Non-limiting examples of fibrous fillers include glass fibers, basalt fibers, including textile glass fibers and quartz. Other fibrous fillers can also be used, such as short inorganic fibers, including processed mineral fibers such as those derived from blends comprising at least one of aluminum silicates, aluminum oxides, magnesium oxides, and calcium sulfate hemihydrate, boron fibers, ceramic fibers such as silicon carbide, and fibers from mixed oxides of aluminum, boron and silicon. Also included among fibrous fillers are single crystal fibers or "whiskers" including silicon carbide, alumina, boron carbide, iron, nickel, copper. In addition, organic reinforcing fibrous fillers and synthetic reinforcing fibers may be used in the present invention. This includes organic polymers capable of forming fibers such as polyethylene terephthalate, polybutylene terephthalate and other polyesters, polyarylates, polyethylene, polyvinylalcohol, polytetrafluoroethylene, acrylic resins, high tenacity fibers with high thermal stability including aromatic polyamides, polyaramid fibers, polybenzimidazole, polyimide fibers such as polyimide 2080 and PBZ fiber; and polyphenylene sulfide, polyether ether ketone, polyimide, polybenzoxazole, aromatic polyimides or polyetherimides, and the like. Combinations of any of the foregoing fibers may also be used.

In some embodiments, glass fibers can be used as non-conductive fibrous fillers. Examples of glass fibers can be include any type of glass fiber, and include those prepared from glass compositions commonly known as "E-glass," "A-glass," "C-glass," "D-glass," "R-glass," "S-glass," as well as E-glass derivatives that are fluorine-free and/or boron-free. Commercially produced glass fibers generally having nominal filament diameters of about 4.0 to about 35.0 micrometers, and most commonly produced E-glass fibers having nominal filament diameters of about 9.0 to about 30.0 micrometers can be included in the thermoplastic composition. The fibers can be made by standard processes, e.g., by steam or air blowing, flame blowing and mechanical pulling. Use of non-round fiber cross section is also possible. The glass fibers can be sized or unsized. Sized glass fibers are conventionally coated on at least a portion of their surfaces with a sizing composition selected for compatibility with the polymeric matrix material. The sizing composition can facilitate wet-out and wet-through of the matrix material upon the fiber strands and assists in attaining desired physical properties in the composite.

In some embodiments, the fibers are glass strands that have been sized. In preparing the glass fibers, a number of filaments can be formed simultaneously, sized with the coating agent and then bundled into what is called a strand. Alternatively the strand itself may be first formed of filaments and then sized. The amount of sizing employed is generally that amount which is sufficient to bind the glass filaments into a continuous strand and ranges from about 0.1 to about 5 wt.%, and more typically ranges from about 0.1 to 2 wt.% based on the weight of the glass fibers. Generally, this can be about 1.0 wt.% based on the weight of the glass filament.

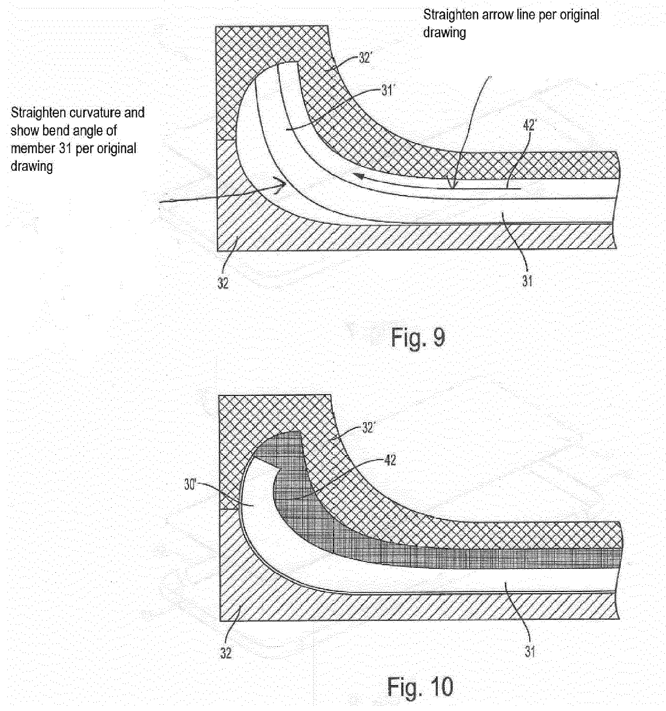

The laminate composite housing back can be formed using a variety of techniques, including but not limited to bladder molding of pre-preg sheets, compression molding of pre-preg sheets, autoclave or vacuum bag molding of prepreg sheets, mandrel molding, wet layup molding of neat sheets, filament winding molding in which fiber bundles are pulled through a wet bath resin and wound over a mandrel, pultrusion or extrusion molding in which fibers saturated with wet resin are pulled or extruded through a die, or resin transfer molding and vacuum assisted resin transfer molding in which fabrics are placed into a mold and injected with fluid resin under pressure. In some embodiments, the laminate composite housing back can be flat. In some embodiments, the laminate composite housing back can be shaped such as with an upturned peripheral portion as shown in FIG. 9 discussed below.

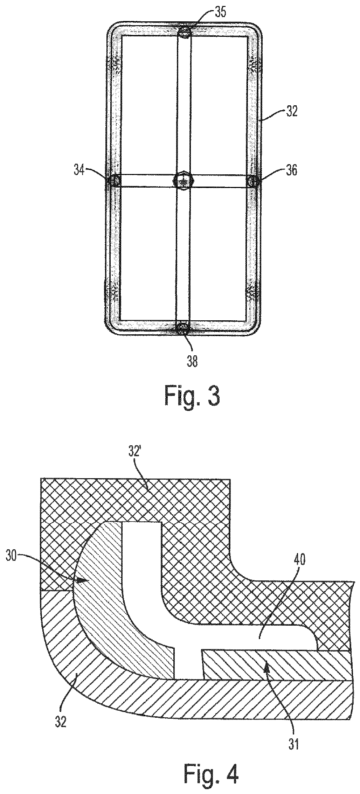

After the outer side wall member and laminate composite back is disposed in the mold, for example as shown in FIG. 2 with the outer side wall member 30 and laminate composite back 31 disposed in the mold 32, the mold can be closed with an upper mold section (32' FIG. 4) followed by injection of a fluid thermoplastic composition into the mold. Thermoplastic polymer resins include but are not limited to oligomers, polymers, ionomers, dendrimers, copolymers such as graft copolymers, block copolymers (e.g., star block copolymers, random copolymers, etc.) and combinations including at least one of the foregoing. Examples of such polymeric resins include, but are not limited to, polycarbonates (e.g., blends of polycarbonate (such as, polycarbonate-polybutadiene blends, copolyester polycarbonates)), polystyrenes (e.g., copolymers of polycarbonate and styrene, polyphenylene ether-polystyrene blends), polyimides (e.g., polyetherimides), acrylonitrile-styrene-butadiene (ABS), polyalkylmethacrylates (e.g., polymethylmethacrylates), polyesters (e.g., copolyesters, polythioesters), polyolefins (e.g., polypropylenes and polyethylenes, high density polyethylenes, low density polyethylenes, linear low density polyethylenes), polyamides (e.g., polyamideimides), polyarylates, polysulfones (e.g., polyarylsulfones, polysulfonamides), polyphenylene sulfides, polytetrafluoroethylenes, polyethers (e.g., polyether ketones, polyether etherketones, polyethersulfones), polyacrylics, polyacetals, polybenzoxazoles (e.g., polybenzothiazinophenothiazines, polybenzothiazoles), polyoxadiazoles, polypyrazinoquinoxalines, polypyromellitimides, polyquinoxalines, polybenzimidazoles, polyoxindoles, polyoxoisoindolines (e.g., polydioxoisoindolines), polytriazines, polypyridazines, polypiperazines, polypyridines, polypiperidines, polytriazoles, polypyrazoles, polypyrrolidines, polycarboranes, polyoxabicyclononanes, polydibenzofurans, polyphthalides, polyacetals, polyanhydrides, polyvinyls (e.g., polyvinyl ethers, polyvinyl thioethers, polyvinyl alcohols, polyvinyl ketones, polyvinyl halides, polyvinyl nitriles, polyvinyl esters, polyvinylchlorides), polysulfonates, polysulfides, polyureas, polyphosphazenes, polysilazzanes, polysiloxanes, and combinations including at least one of the foregoing.

More particularly, the injection molded polymer can include, but is not limited to, polycarbonate resins (e.g., LEXAN™ resins, commercially available from SABIC such as LEXAN™ XHT, LEXAN™ HFD, etc.), polyphenylene ether-polystyrene blends (e.g., NORYL™ resins, commercially available from SABIC), polyetherimide resins (e.g., ULTEM™ resins, commercially available from SABIC), polybutylene terephthalate-polycarbonate blends (e.g., XENOY™ resins, commercially available from SABIC), copolyestercarbonate resins (e.g. LEXAN™ SLX or LEXAN™ FST resins, commercially available from SABIC), acrylonitrile butadiene styrene resins (e.g., CYCOLOY resins, commercially available from SABIC), polyetherimide/siloxane resins (e.g., SILTEM™, commercially available from SABIC), polypropylene resins, for example, long glass fiber filled polypropylene resins (e.g., STAMAX™ resins, commercially available from SABIC), and combinations including at least one of the foregoing resins. In some embodiments, the polymeric resins can include, but are not limited to, homopolymers and copolymers of a polycarbonate, a polyester, a polyacrylate, a polyamide, a polyetherimide, a polyphenylene ether, or a combination including at least one of the foregoing resins. The polycarbonate can include copolymers of polycarbonate (e.g., polycarbonate-polysiloxane, such as polycarbonate-polysiloxane block copolymer), linear polycarbonate, branched polycarbonate, end-capped polycarbonate (e.g., nitrile end-capped polycarbonate) blends of PC, such as PC/ABS blend, and combinations including at least one of the foregoing, for example a combination of branched and linear polycarbonate.

In addition to thermoplastic polymer resin, the thermoplastic composition can include chopped fiber (for which reference is made to the description above of chopped fibers for injection molded outer side wall members) or various additives. The amount of fiber can vary depending on the target properties of the housing. In some embodiments, the fiber is present in the thermoplastic composition in an amount in a range with a low end of 10 wt.%, 20 wt.%, or 30 wt.%, and an upper end of 40 wt.%, 50 wt.%, or 60 wt.% based on the total weight of the thermoplastic composition. Reference is also made to the description above of chopped fibers for injection molded outer side wall members. An additive composition can be used, comprising one or more additives selected to achieve a desired property, with the proviso that the additive(s) are also selected so as to not significantly adversely affect a desired property of the thermoplastic composition. The additive composition or individual additives can be mixed at a suitable time during the mixing of the components for forming the composition. The additive can be soluble or non-soluble in the thermoplastic polymer. The additive composition can include an impact modifier, flow modifier, non-fiber filler (e.g., a particulate polytetrafluoroethylene (PTFE), glass, carbon, mineral, or metal), antioxidant, heat stabilizer, light stabilizer, ultraviolet (UV) light stabilizer, UV absorbing additive, plasticizer, lubricant, release agent (such as a mold release agent), adhesion promoter, antistatic agent, anti-fog agent, antimicrobial agent, colorant (e.g, a dye or pigment), surface effect additive, radiation stabilizer, flame retardant, anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

In some embodiments for which the thermoplastic composition includes fiber, powdered thermoplastic polymer can be blended with chopped fibers in a mixer such as a Henschel high speed mixer. Other low shear processes including but not limited to hand mixing can also accomplish this blending. The blend of powdered polymer and chopped fibers can fed to an extruder through a hopper. Alternately, the glass can be incorporated into the composition by feeding unchopped fiber directly into the extruder. The dispersed glass fibers may be reduced in length as a result of the shearing action on the glass strands in the extruder barrel or during shearing action during injection molding. The fibers can also be compounded into a masterbatch with a desired polymeric resin and fed into the extruder. The extruder is generally operated at a temperature higher than that necessary to cause the polymeric resin to flow. The extrudate can be quenched in a water batch and pelletized.

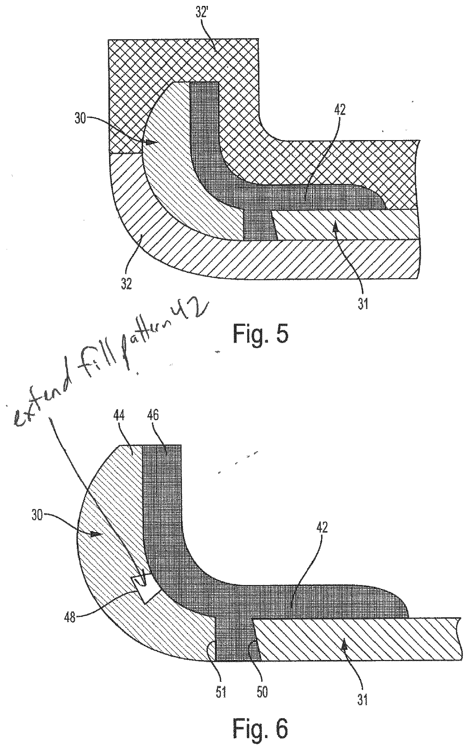

The thermoplastic composition can be introduced to an injection molding machine where it is heated to a fluid form and injected, for example with a screw and barrel injection device, into a mold with the outer side wall member inserts disposed therein. FIG. 3 schematically shows a configuration for introduction of the thermoplastic composition to the mold. FIG. 3 shows the mold 32 equipped with four drops 34, 35, 36, and 38 for delivering the fluid thermoplastic composition to the mold 32. Additional drops can be added to meet lower wall thicknesses. Multiple drops can be activated concurrently or sequentially. Sequential activation can eliminate multiple flow fronts that can cause weak spots where they meet. FIG. 4 schematically shows a cross-section view of the outer side wall member 30 and laminate composite housing back 31 disposed in the cavity 40 of mold 32 enclosed by upper mold section 32'. FIG. 5 shows the view at the cross-section of FIG. 4 with the cavity filled by thermoplastic polymer to form connector member 42, and FIG. 6 shows the schematic cross-sectional view of the side wall after the thermoplastic composition has solidified and the device has been removed from the mold. Several optional features are also shown in FIG. 6. In some embodiments such as shown in FIG. 6, the side wall can have an outer side wall portion 44 that includes the outer side wall member 30, and an inner side wall portion 46 that includes a portion of injection-molded connector member 42. As further shown in FIG. 6, the outer side wall member 30 can include features such as machined features to provide undercut features such as 48 to promote adhesion of the injection molded thermoplastic connector member 42 and the outer side wall member 30. In some embodiments, these features on the outer side wall member 30 can be recessed as shown with feature 48 or they can be proud (i.e., protruding). Another optional feature shown in FIG. 6 includes an angled surface 50 of the laminate composite housing back to provide an interlocking retention feature with overmolded thermoplastic resin. Although not shown, a similar angled configuration can be utilized on the surface 51 of the outer side wall member 30.

As mentioned above, a side wall of a portable electronic as disclosed herein can include a single unitary outer side wall member 30 as shown in FIG. 2, or a plurality of outer side wall members. FIG. 7 schematically shows the housing 12 with a unitary contiguous outer side wall member 30, which can be formed from a structural material such as a metal. For ease of illustration, the housing 12 and outer side wall member 30 are shown in exploded view. However, other configurations are also contemplated. FIG. 8 schematically shows an outer side wall member configuration for a five-sided rectangular-shaped housing 12' in which outer side wall members 52 and 52' are disposed on shorter end edge sections the housing 12', and outer side wall members 54 and 54' are disposed on the longer side edge sections of the housing 12'. In some embodiments, the end-disposed outer side wall members 52/52' can be formed from a structural material such as a metal. In some embodiments, the structural material outer side wall members 52/52' can extend to cover one or more of the housing corners, including all four corners as shown in FIG. 8. In some embodiments, the side-disposed outer side wall members 54/54' can be formed from a polymeric material, such as a polymeric structural material (e.g., continuous fiber composite) or other polymeric materials such as an injection molded thermoplastic. Other variations are also contemplated. For example, in some embodiments (not shown), the longer side-disposed outer side wall members 54/54' can be formed from a structural material such as a metal (and can also extend to cover one or more of the housing corners), and the shorter end-disposed side wall members 52/52' can be formed from a polymeric material such as a polymeric structural material (e.g., continuous fiber composite) or other polymeric materials such as an injection molded thermoplastic. Additionally, although the outer side wall members disclosed herein have been shown with a more or less uniform thickness, the thickness can be varied, for example by providing thicker sections in likely impact zones and thinner sections elsewhere along the side wall.

In some embodiments, the outer side wall member can be formed at least in part from the laminate composite housing back 31, as schematically shown in side wall cross-sectional view of FIGS. 9 and 10. As shown in FIG. 9, a laminate composite back 31 with an upturned end portion 31' is disposed in the cavity of mold 32 including upper mold section 32'. A fluid thermoplastic composition is injected into the mold cavity, with pressure from the injected fluid thermoplastic composition exerted along vector 42'. As shown in FIG. 10, pressure and heat from the fluid thermoplastic composition deforms the upturned end portion 31' of the laminate composite back, resulting in formation of a laminate composite outer side wall member 30', with the injection molded connector member 42 molded to the laminate composite back 31 and the laminate composite outer side wall member 30'.

This disclosure further encompasses the following numbered Aspects.
Aspect 1. A portable electronic device, comprising: a laminate composite housing back comprising fiber and resin; a housing side wall attached to the housing back, said housing side wall including an outer side wall member; an injection molded connector member molded to a first surface on the outer side wall member and to a second surface on the housing back; a cover engaged with the housing side wall, enclosing an internal space surrounded by the housing back, the housing side wall, and the cover; and an electronic component in the internal space.
Aspect 2. The portable electronic device of claim 1, wherein the outer side wall member includes a structural material, wherein the structural material includes any one or combination of a metal, or a ceramic, or a composite material comprising fiber and resin, wherein the fiber is aligned, or is continuous, or is both aligned and continuous.
Aspect 3. The portable electronic device of claim 2, wherein the outer side wall member includes the structural material along its entirety.
Aspect 4. The portable electronic device of claim 2, wherein the housing back is rectangular with first and second opposing edges, and third and fourth opposing edges along its periphery that are optionally shorter than the first and second opposing edges, and the outer side wall member includes a first structural material side wall member and a second structural material side wall member disposed along the first and second opposing edges of the housing back periphery.
Aspect 5. The portable electronic device of claim 4, wherein the first and second metal outer side wall members each extends around two adjacent corners of the rectangular periphery of the housing back.
Aspect 6. The portable electronic device of claims 4 or 5, wherein the side wall includes a polymeric side wall along the third and fourth opposing edges of the housing back periphery.
Aspect 7. The portable device of claim 6, wherein the polymeric side wall comprises third and fourth polymeric outer side wall members connected to the housing back by the molded connector member, or wherein the polymeric side wall includes a peripheral portion of the laminate composite housing back formed into the side wall along the third and fourth opposing edges of the housing back periphery.
Aspect 8. The portable electronic device of any preceding claim, wherein the fiber is transparent to electromagnetic energy.
Aspect 9. The portable electronic device of any preceding claim, wherein the connector member is arranged with an undercut engagement with the housing back or the outer side wall member or both of the housing back or the outer side wall member.
Aspect 10. The portable electronic device of any preceding claim, wherein the side wall includes an inner side wall member comprising a portion of the connector member.
Aspect 11. The portable electronic device of any preceding claim, wherein the outer side wall member includes a formed peripheral portion of the laminate composite housing back.
Aspect 12. A method of making a portable electronic device, comprising: placing a laminate composite housing back and a side wall member in a mold; injecting a fluid thermoplastic polymer composition into the mold to form a connector member molded to the housing back and the side wall member, thereby forming an open housing comprising the housing back and a side wall attached to the housing back; disposing an electronic component in the open housing; and engaging a cover with the side wall to enclose the electronic component in the housing.
Aspect 13. The method of Aspect 12, further comprising forming the side wall member by deforming a peripheral portion of the housing back under pressure from injected fluid thermoplastic composition.
Aspect 14. A method of making a housing including a back and a side wall, the method comprising placing a laminate composite housing back in a mold; injecting a fluid thermoplastic polymer composition into the mold to form a connector member molded to the housing back and the side wall member, thereby deforming a peripheral portion of the housing back under pressure from injected fluid thermoplastic composition to form an outer side wall member, and to mold the fluid thermoplastic polymer composition to the side wall member and to the housing back.
Aspect 15. The method of Aspects 13 or 14, further comprising heating the laminate composite housing back before injecting the fluid thermoplastic polymer composition.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A portable electronic device, comprising:
a laminate composite housing back comprising fiber and resin;
a housing side wall attached to the housing back, said housing side wall including an outer side wall member;
an injection molded connector member molded to a first surface on the outer side wall member and to a second surface on the housing back;
a cover engaged with the housing side wall, enclosing an internal space surrounded by the housing back, the housing side wall, and the cover; and
an electronic component in the internal space.

2. The portable electronic device of claim 1, wherein the outer side wall member includes a structural material, wherein the structural material includes any one or combination of a metal, or a ceramic, or a composite material comprising fiber and resin, wherein the fiber is aligned, or is continuous, or is both aligned and continuous.

3. The portable electronic device of claim 2, wherein the outer side wall member includes the structural material along its entirety.

4. The portable electronic device of claim 2, wherein the housing back is rectangular with first and second opposing edges, and third and fourth opposing edges along its periphery that are optionally shorter than the first and second opposing edges, and the outer side wall member includes a first structural material side wall member and a second structural material side wall member disposed along the first and second opposing edges of the housing back periphery.

5. The portable electronic device of claim 4, wherein the first and second metal outer side wall members each extends around two adjacent corners of the rectangular periphery of the housing back.

6. The portable electronic device of claims 4 or 5, wherein the side wall includes a polymeric side wall along the third and fourth opposing edges of the housing back periphery.

7. The portable device of claim 6, wherein the polymeric side wall comprises third and fourth polymeric outer side wall members connected to the housing back by the molded connector member, or wherein the polymeric side wall includes a peripheral portion of the laminate composite housing back formed into the side wall along the third and fourth opposing edges of the housing back periphery.

8. The portable electronic device of any preceding claim, wherein the fiber is transparent to electromagnetic energy.

9. The portable electronic device of any preceding claim, wherein the connector member is arranged with an undercut engagement with the housing back or the outer side wall member or both of the housing back or the outer side wall member.

10. The portable electronic device of any preceding claim, wherein the side wall includes an inner side wall member comprising a portion of the connector member.

11. The portable electronic device of any preceding claim, wherein the outer side wall member includes a formed peripheral portion of the laminate composite housing back.

12. A method of making a portable electronic device, comprising:
placing a laminate composite housing back and a side wall member in a mold;
injecting a fluid thermoplastic polymer composition into the mold to form a connector member molded to the housing back and the side wall member, thereby forming an open housing comprising the housing back and a side wall attached to the housing back;
disposing an electronic component in the open housing; and
engaging a cover with the side wall to enclose the electronic component in the housing.

13. The method of claim 12, further comprising forming the side wall member by deforming a peripheral portion of the housing back under pressure from injected fluid thermoplastic composition.

14. A method of making a housing including a back and a side wall, the method comprising:
placing a laminate composite housing back in a mold;
injecting a fluid thermoplastic polymer composition into the mold, thereby deforming a peripheral portion of the housing back under pressure from the injected fluid thermoplastic composition to form an outer side wall member, and to mold the fluid thermoplastic polymer composition to the outer side wall member and to the housing back.

15. The method of claims 13 or 14, further comprising heating the laminate composite housing back before injecting the fluid thermoplastic polymer composition.
